# EUROPÄISCHE PATENTANMELDUNG

(11) **EP 1 270 888 A1**
(43) Veröffentlichungstag der Anmeldung: **02.01.2003**
(21) Anmeldenummer: 02009533.7
(22) Anmeldetag: 26.04.2002
(51) Int. Cl.: F01N 3/22, B01D 53/94, F01N 3/30, F01N 3/32

(54) **Verfahren zur Reduzierung unverbrannter Abgaskomponenten im Abgas einer Brennkraftmaschine**

(30) Priorität: 29.06.2001 DE 10131542
(71) Anmelder: AUDI AG, 85045 Ingolstadt (DE)
(72) Erfinder: Simonis, Jan, 85049 Ingolstadt (DE); Stefan, Joachim, 85122 Hofstetten (DE)
(74) Vertreter: Thielmann, Frank

(57) **Zusammenfassung**

Verfahren und Brennkraftmaschine (1) zur Reduzierung unverbrannter Abgaskomponenten im Abgas einer Brennkraftmaschine (1), insbesondere von HC und CO, wobei das Abgas einem im Abgaskanal (3) angeordneten Katalysator (6) zugeführt wird, in dem die unverbrannten Abgaskomponenten mit vorhandenem Sauerstoff reagieren, wobei über eine im Abgaskanal (3) angeordnete und dem Katalysator (6) vorgeschaltete Lufteinlaßeinrichtung (7) zur Erhöhung des Sauerstoffgehalts im Abgas Umgebungsluft in den Abgaskanal (3) eingelassen wird.

## Beschreibung

Die Erfindung betrifft ein Verfahren zur Reduzierung unverbrannter Abgaskomponenten im Abgas einer Brennkraftmaschine, insbesondere von HC und CO, wobei das Abgas mindestens einem im Abgaskanal angeordneten Katalysator zugeführt wird, in dem die unverbrannten Abgaskomponenten mit vorhandenem Sauerstoff reagieren.

Viele Brennkraftmaschinen bspw. von Kraftfahrzeugen haben in ihrem Abgassystem einen oder mehrere Katalysatoren zur Reduzierung des Gehalts an schädlichen Abgaskomponenten wie z.B. Kohlenmonoxid (CO) oder Kohlenwasserstoffen (HC). Hierzu umfaßt die Katalysatoreinrichtung in der Regel Edelmetalle wie Platin, Palladium und dergleichen als Katalysatoren, an denen die Reaktion zur Reduzierung der genannten Komponenten erfolgt. Im Rahmen dieser Reduzierung reagieren z.B. die genannten Abgaskomponenten HC und CO, die im Abgas anwesend sind, mit Sauerstoff (O₂), der ebenfalls im Abgas vorhanden ist, wodurch H₂O und CO₂ entsteht.

Im Betrieb des Fahrzeugs bzw. der Brennkraftmaschine können nun Fahrzustände auftreten, bei denen nicht mit optimalem Kraftstoff-Luftverhältnis gefahren werden kann. Diese Zustände werden insbesondere unter hoher Last erreicht. In solchen Fällen nimmt der Anteil an unverbrannten Abgaskomponenten wie z.B. HC und CO zu. Dieser Überschuß muß vom nachgeschalteten Katalysator weitestgehend oxidiert und abgebaut werden, um die Emission zu vermindern. Aufgrund eines Sauerstoffmangels im Abgas kann aber im Betrieb eine vollständige Oxidation nicht erfolgen.

Bei einem bekannten Konzept, der sogenannten "Sekundärluft-einblasung" wird in das Abgassystem einer Brennkraftmaschine in den ersten Sekunden nach dem Kaltstart zusätzlich Umgebungsluft eingebracht. Dies dient dazu, um den oder die Katalysatoren schnell über ihre Anspringtemperatur zu erwärmen, so daß sie möglichst rasch im optimalen Temperaturbereich arbeiten. Das Verfahren ist jedoch nicht anwendbar, wenn die Brennkraftmaschine im betriebswarmen Zustand in Bereichen hoher Last betrieben wird. Ein derartiger Hochlastbetrieb kann beispielsweise bei Überholvorgängen oder anderen kurzzeitigen Beschleunigen auftreten.

Der Erfindung liegt damit das Problem zugrunde, eine Möglichkeit anzugeben, die Emission im Fahrbetrieb insbesondere bei den genannten Betriebszuständen zu vermindern.

Zur Lösung des Problems ist bei einem Verfahren der eingangs genannten Art erfindungsgemäß vorgesehen, daß dem Abgaskanal über einen Lufteinlaß, dem eine Lufteinlaßeinrichtung zugeordnet ist, Umgebungsluft zuführbar ist, wobei der Lufteinlaß in Strömungsrichtung hinter solchen Bauteilen angeordnet ist, die während des Betriebs der Brennkraftmaschine durch hohe Temperaturen belastet sind und wobei die Zufuhr von Umgebungsluft in Abhängigkeit des Meßsignals wenigstens eines im Abgaskanal angeordneten und den Lufteinlaß in Strömungsrichtung nachgeschalteten Sensors erfolgt.

Durch Einlassen der Umgebungsluft wird vorteilhaft der Sauerstoffgehalt erhöht, so daß die unverbrannten Abgasanteile z.B. in einem nachgeschalteten Katalysator, der wegen der entfernten Lage vom Motor nicht temperaturkritisch ist, reagieren und umgewandelt werden können. Der Katalysator erreicht hierdurch auch bessere Betriebstemperaturen, so daß die Abgasreinigung auch dann verbessert wird, wenn bei Betriebszuständen, bei denen mit optimalem Kraftstoff-Luftver-hältnis gefahren wird, kurzzeitige Beschleunigungen auftreten, die "fettes" Abgas zur Folge haben.

Da die unverbrannten Abgasanteile mit dem zusätzlich eingelassenen Sauerstoff bereits im Abgaskanal reagieren können, ist ein weiterer nachgeschalteter Katalysator nicht notwendigerweise vorzusehen. Es wird vom Gesamtsystem und den jeweiligen Anforderungen abhängen, ob die Reduzierung der Emissionen im Abgaskanal bereits ausreichend ist oder ob ein oder weitere Katalysatoren notwendig sind.

Als Sensor kann beispielsweise ein Sauerstoffsensor, d.h. eine sogenannte O₂-Sonde oder auch ein Temperatursensor verwendet werden. Der verwendete Sensor erfaßt entweder den Sauerstoffgehalt oder die Temperatur des Abgases. Über sein Meßsignal erfolgt dann die bedarfsabhängige Zu- oder Abschaltung sowie ggf. die Steuerung oder Regelung der zusätzlichen Luftzufuhr. Als Sensor können auch andere Sensoren zur Messung der Abgaszusammensetzung verwendet werden.

Die Lufteinlaßeinrichtung wird zweckmäßigerweise bedarfsabhängig zu- oder abgeschaltet, das heißt, die Zufuhr der Umgebungsluft erfolgt nur dann, wenn sie tatsächlich auch benötigt wird. Weiterhin kann die Umgebungsluft gesteuert oder geregelt zugeführt werden.

Die Umgebungsluft wird zweckmäßigerweise mittels einer Pumpe, die beispielsweise ein Gebläse sein kann, zugeführt. Dabei kann es zweckmäßig sein, wenn mittels eines im Abgaskanal angeordneten Drucksensors der Druck des Abgases gemessen wird, wobei in Abhängigkeit des Abgasdrucks die Umgebungsluft durch Nutzung des Staudrucks des mittels der Brennkraftmaschine bewegten Fahrzeugs oder der Pumpe zugeführt wird. Nach dieser Erfindungsausgestaltung wird in Abhängigkeit des gemessenen Abgasdrucks entschieden, ob zur Luftzufuhr die Pumpe zugeschaltet wird, oder ob bereits der Staudruck des Fahrzeugs, mit dem die Lufteinlaßeinrichtung, die z. B. einen mit dem Staudruck beaufschlagbaren Einlaßstutzen besitzt, beaufschlagt wird, ausreichend ist. Wird also nur der Staudruck verwendet, so reicht es aus, lediglich das nachgeschaltete Ventil, das zum Abgaskanal führt, zu öffnen, wobei eine Regelung auch in diesem Fall durch entsprechende Stellung des Ventils, insbesondere in Anbetracht des herrschenden Staudrucks, möglich ist. Der Staudruck selbst kann zusätzlich mittels eines geeigneten weiteren Sensor (Drucksensor, Luftmassenmesser, etc.) erfaßt werden. Wird die Pumpe genutzt, so wird - je nach Konfiguration - lediglich die Pumpe zugeschalten, die direkt mit dem Abgaskanal kommuniziert, oder aber gegebenenfalls ein der Pumpe nachgeschaltetes Ventil zusätzlich geöffnet.

Neben dem Verfahren betrifft die Erfindung ferner eine Brennkraftmaschine mit einem Abgaskanal zum Abführen des aus der Verbrennung eines Brennstoffs entstehenden Abgases, in dem ein Katalysator zur Reduzierung unverbrannter Abgaskomponenten, insbesondere HC und CO, angeordnet ist. Diese Brennkraftmaschine zeichnet sich erfindungsgemäß dadurch aus, daß am Abgaskanal ein Lufteinlaß mit einer Lufteinlaßeinrichtung vorgesehen ist, wobei der Lufteinlaß in Strömungsrichtung hinter solchen Bauteilen angeordnet ist, die während des Betriebs der Brennkraftmaschine durch hohe Temperaturen belastet sind und wobei im Abgaskanal in Strömungsrichtung nach dem Lufteinlaß mindestens ein Sensor angebracht ist.

Erfindungsgemäß kann die Lufteinlaßeinrichtung bedarfsabhängig zu- oder abschaltbar sein, wobei zum Schalten entsprechende Schaltmittel z.B. in Form eines Ventils vorgesehen sind. Zweckmäßig ist es ferner, wenn die zuführbare Luftmenge regelbar ist. Hierfür kann wenigstens ein im Abgaskanal angeordneter und der Lufteinlaßeinrichtung nachgeschalteter Sensor zur Messung der Abgaszusammensetzung oder Temperatursensor vorgesehen sein, über dessen Meßsignal der Öffnungsgrad des Ventils und/oder der Betrieb der Pumpe steuerbar ist. Das Ventil kann dabei stufig oder stufenlos verstellbar sein.

Die Lufteinlaßeinrichtung selbst kann erfindungsgemäß einen zur Umgebung hin offenen, mit dem Staudruck des mittels der Brennkraftmaschine bewegbaren Fahrzeug beaufschlagbaren Einlaßstutzen oder dergleichen umfassen. Weiterhin kann ein im Abgaskanal angeordneter Drucksensor zum Messen des Drucks des Abgases vorgesehen sein, wobei in Abhängigkeit des Abgasdrucks die Umgebungsluft durch Nutzung des Staudrucks des mittels der Brennkraftmaschine bewegten Fahrzeugs oder einer die Luft fördernde Pumpe zuführbar ist. Über den Abgasdruck kann also die Weise, über die die Luft zugeführt wird, gesteuert werden. Im Falle hohen Abgasdruckes wird die Pumpe zusätzlich zugeschalten, bei niedrigem Abgasdruck ist mitunter bereits der gegebene Staudruck ausreichend, um genügend Umgebungsluft in den Abgaskanal zu führen. Der Katalysator selbst ist zweckmäßigerweise ein Unterbodenkatalysator.

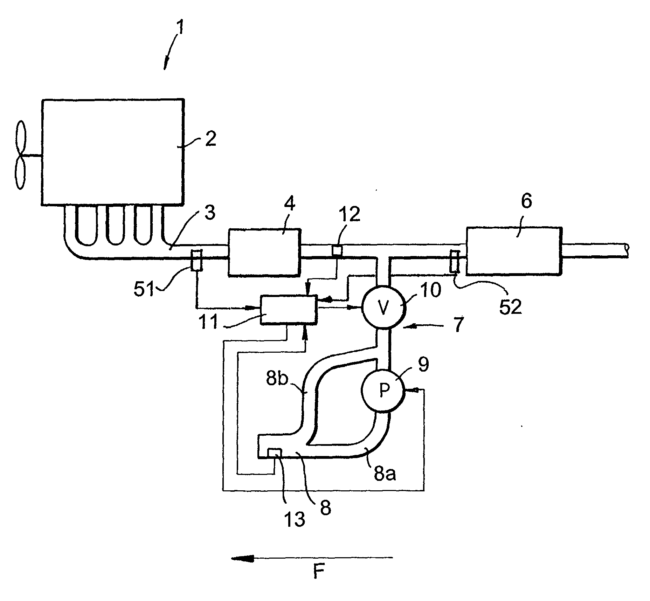

Weitere Vorteile, Merkmale und Einzelheiten der Erfindung ergeben sich aus dem im folgenden beschriebenen Ausführungsbeispiel sowie anhand der Zeichnung.

In der einzigen Figur ist eine erfindungsgemäße Brennkraftmaschine 1 gezeigt, umfassend einen Brennkraftmotor 2 mit nachgeschaltetem Abgaskanal 3, dem im Motor 2 erzeugte Abgase zugeführt werden. Diese passieren einen Sauerstoffsensor 51 und gelangen dann in einen Vorkatalysator 4. Über den Sauerstoff-sensor 51 wird die Sauerstoffkonzentration im Abgas gemessen. Das Abgas passiert anschließend einen Drucksensor 12 und einen weiteren Sensor 52 und gelangt in einen Katalysator 6, z.B. einen Unterbodenkatalysator, wo noch verbliebene unverbrannte Abgasanteile wie HC und CO katalytisch entfernt werden. Das auf diese Weise weitgehend gereinigte Abgas wird anschließend ausgestoßen. Der weitere Sensor 52 kann ebenfalls ein Sauerstoffsensor sein, er kann aber auch ein Temperatursensor oder ein anderer Sensor sein.

Zwischen dem Drucksensor 12 und dem weiteren Sensor 52 mündet ein Lufteinlaß 14, über den bei Bedarf Umgebungsluft in den Luftkanal 3 eingelassen werden kann. Der Lufteinlaß 14 ist mit der Lufteinlaßeinrichtung 7 verbunden, die einen im gezeigten Beispiel in Fahrtrichtung F gerichteten offenen Luft-einlaßstutzen 8 umfaßt, der in einer Pumpe 9 mündet. Der Pumpe 9 ist ein Ventil 10 nachgeschaltet. Der zweite Ast 8b mündet direkt vor dem Ventil 10. Mit dem Ventil 10 kann der Lufteinlaß in den Abgaskanal gesteuert werden.

Im folgenden wird der weitere Sensor als Sauerstoffsensor 52, d.h. als O₂-Sensor 52, bezeichnet.

Die Funktionsweise ist nun derart, daß über den stromabwärts vom Lufteinlaß 14 und von dem Katalysator 6 angeordneten O₂-Sensor 52 zunächst der Sauerstoff im Abgas gemessen wird. Das Signal wird an eine zentrale Steuerungseinrichtung 11, z.B. an die zentrale Steuerungseinrichtung der Brennkraftmaschine, gegeben. Nach Auswertung des Signals wird entschieden, ob eine zusätzliche Zufuhr an Umgebungsluft erforderlich ist oder nicht. Zusätzlich zum Sauerstoffmeßsignal wird mittels eines Drucksensors 12 der Abgasdruck gemessen und das Meßsignal an die Steuerungseinrichtung 11 gegeben. Ist nun die Zufuhr von Umgebungsluft erforderlich so wird über die Steuerungseinrichtung 11 die Lufteinlaßeinrichtung zugeschalten. Hierzu wird das Ventil 10 geöffnet. Je nachdem, wie groß der mittels des Drucksensors 13 am Lufteinlaßstutzen 8 gemessene Staudruck ist, kann es nun ausreichend sein, die Luftzufuhr ausschließlich unter Nutzung des Staudrucks über den Ast 8b zum Ventil 10 zu bewerkstelligen. Bei zu geringem Staudruck bzw. zu hohem Abgasdruck wird zusätzlich die Pumpe 9 zugeschalten, so daß die Umgebungsluft mit hinreichend großem Druck zugeführt werden kann. Die Regelung der zugeführten Luftmenge erfolgt im gezeigten Beispiel über die Stellung des Ventils 10 in Abhängigkeit von dem im 0₂-Sensor 52 gemessenen Wert. Dabei wird auf einen Wert von λ = 1 geregelt, so daß der Katalysator im optimalen Bereich betrieben wird. Diese Regelung auf λ = 1 erfolgt somit auch dann, wenn der erste Sensor aufgrund des Hochlastbetriebes Sauerstoffmangel detektiert.

Durch diese Luftzufuhr wird der Sauerstoffgehalt im Abgas erhöht, so daß eine weitestgehende Umsetzung der unverbrannten Abgasanteile im Katalysator 6 erfolgen kann. Dieser erreicht für seinen Betrieb vorteilhaftere Temperaturen. Natürlich kann diese Luftzufuhr auch dann erfolgen, wenn zunächst mit optimalem Kraftstoff-Luftverhältnis gefahren und dann kurzzeitig beschleunigt wird. Der Zeitpunkt, wann zugeschalten wird, ist seitens der Steuerungseinrichtung 11 z. B. durch Hinterlegung eines entsprechenden Wertes definiert.

Abschließend ist darauf hinzuweisen, daß selbstverständlich auch unterschiedliche Modifikationen der Lufteinlaßeinrichtung 7 denkbar sind. So kann z. B. die Luftzufuhr generell unter Verwendung einer Pumpe erfolgen, das heißt, es wäre lediglich der Ast 8a vorhanden, der Ast 8b wäre nicht realisiert. Weiterhin ist es denkbar, im Ast 8b ein zusätzliches Ventil vorzusehen, so daß der Ast 8b geschlossen werden kann, wenn die Pumpe 9 zugeschalten wird. Soweit nur der Ast 8a vorhanden ist, könnte die Luft mittels des Staudrucks auch ohne Zuschalten der Pumpe 9 an den Lufteinlaß 14 strömen, wenn die Pumpe 9 so ausgelegt ist, daß sie im Stillstand Luft passieren läßt.

Schließlich sei darauf hingewiesen, daß der Drucksensor 12 nicht notwendigerweise benötigt wird. Die Steuerung oder Regelung der Zufuhr von Umgebungsluft kann allein mittels des Sensors 52 erfolgen. Die Verwendung des Drucksensors 12 ist eine Frage des Steueroder Regelaufwandes, den man betreiben will, insbesondere im Hinblick auf die Genauigkeit und Geschwindigkeit der Steuerung oder Regelung.

### Bezugszeichenliste

- 1: Brennkraftmaschine
- 2: Brennkraftmotor
- 3: Abgaskanal
- 4: Vorkatalysator
- 6: Katalysator
- 7: Lufteinlaßeinrichtung
- 8: Lufteinlaßstutzen
- 8a: erster Ast
- 8b: zweiter Ast
- 9: Pumpe
- 10: Ventil
- 11: Steuerungseinrichtung
- 12, 13: Drucksensor
- 14: Lufteinlaß
- 51: Sauerstoffsensor
- 52: weiterer Sensor

- F: Fahrtrichtung

## Patentansprüche

1. Verfahren zur Reduzierung unverbrannter Abgaskomponenten insbesondere im Hochlastbereich einer Brennkraftmaschine im Abgas der Brennkraftmaschine (1), wobei das Abgas mindestens einem im Abgaskanal (3) angeordneten Katalysator (4) zugeführt wird,
wobei dem Abgaskanal (3) über einen Lufteinlaß (14), dem eine Lufteinlaßeinrichtung (7) zugeordnet ist, Umgebungsluft zuführbar ist,
wobei der Lufteinlaß (14) in Strömungsrichtung (-F) hinter solchen Bauteilen angeordnet ist, die während des Betriebes der Brennkraftmaschine (1) durch hohe Temperaturen belastet sind und
wobei die Zufuhr von Umgebungsluft in Abhängigkeit des Meßsignals wenigstens eines im Abgaskanal (3) angeordneten und dem Lufteinlaß (14) in Strömungsrichtung (-F) nachgeschalteten Sensors (52) erfolgt.

2. Verfahren nach Anspruch 1, **dadurch gekennzeichnet, daß** der Sensor (52) ein Sensor zur Messung der Abgaszusammensetzung, beispielsweise ein Sauerstoffsensor, ist.

3. Verfahren nach Anspruch 1, **dadurch gekennzeichnet, daß** der Sensor (52) ein Temperatursensor ist.

4. Verfahren nach einem der vorstehenden Ansprüche, **dadurch gekennzeichnet, daß** in Strömungsrichtung (-F) nach dem Lufteinlaß (14) mindestens ein weiterer Katalysator (6) angeordnet ist.

5. Verfahren nach einem der vorstehenden Ansprüche, **dadurch gekennzeichnet, daß** die Lufteinlaßeinrichtung (7) bedarfsabhängig zu- oder abgeschaltet wird.

6. Verfahren nach einem der vorstehenden Ansprüche, **dadurch gekennzeichnet, daß** die Umgebungsluft geregelt oder gesteuert zugeführt wird.

7. Verfahren nach einem der vorstehenden Ansprüche, **dadurch gekennzeichnet, daß** die Umgebungsluft mittels einer Pumpe (9) zugeführt wird.

8. Verfahren nach einem der vorstehenden Ansprüche, **dadurch gekennzeichnet, daß** mittels eines im Abgaskanal (3) angeordneten Drucksensors (12) der Druck des Abgases gemessen wird, wobei in Abhängigkeit des Abgasdrucks die Umgebungsluft durch Nutzung des Staudrucks des mittels der Brennkraftmaschine (1) bewegten Fahrzeugs oder der Pumpe (9) zugeführt wird.

9. Verfahren nach einem der vorstehenden Ansprüche, **dadurch gekennzeichnet, daß** ein weiterer Katalysator (6) ein Unterbodenkatalysator ist.

10. Brennkraftmaschine (1) mit einem Abgaskanal (3) zum Abführen des aus der Verbrennung eines Brennstoffs entstehenden Abgases, in dem mindestens ein Katalysator (4, 6) zum Reduzieren unverbrannter Abgaskomponenten angeordnet ist, **dadurch gekennzeichnet, daß** am Abgaskanal (3) ein Lufteinlaß (14) mit einer Lufteinlaßeinrichtung (7) vorgesehen ist, wobei der Lufteinlaß (14) in Strömungsrichtung hinter solchen Bauteilen angeordnet ist, die während des Betriebes der Brennkraftmaschine (1) durch hohe Temperaturen belastet sind und daß im Abgaskanal (3) in Strömungsrichtung (-F) nach dem Lufteinlaß mindestens ein Sensor (52) angebracht ist.

11. Brennkraftmaschine (1) nach Anspruch 10, **dadurch gekennzeichnet, daß** der Sensor (52) ein Sensor zur Messung der Abgaszusammensetzung, beispielsweise ein Sauerstoffsensor, ist.

12. Brennkraftmaschine (1) nach Anspruch 10, **dadurch gekennzeichnet, daß** der Sensor (52) ein Temperatursensor ist.

13. Brennkraftmaschine (1) nach einem der Ansprüche 10 bis 12 **dadurch gekennzeichnet, daß** in Strömungsrichtung (-F) nach dem Lufteinlaß (14) mindestens ein weiterer Katalysator (6) angeordnet ist.

14. Brennkraftmaschine nach einem der Ansprüche 10 bis 13, **dadurch gekennzeichnet, daß** eine Schaltvorrichtung (10) vorgesehen ist, mittels der die Lufteinlaßeinrichtung (7) bedarfsabhängig zu- oder abschaltbar ist.

15. Brennkraftmaschine (1) nach Anspruch 14, **dadurch gekennzeichnet, daß** die Schaltvorrichtung ein Ventil (10) und/oder eine die Umgebungsluft fördernde Pumpe (9) umfaßt.

16. Brennkraftmaschine nach einem der Ansprüche 10 bis 15, **dadurch gekennzeichnet, daß** eine Vorrichtung zur Steuerung oder Regelung der zuführbaren Luftmenge vorgesehen ist.

17. Brennkraftmaschine nach Anspruch 16, **dadurch gekennzeichnet, daß** der Öffnungsgrad des Ventils (10) und/oder der Betrieb der Pumpe (9) mittels des Meßsignals des Sensors (52) steuer- oder regelbar sind.

18. Brennkraftmaschine nach einem der Ansprüche 10 bis 17, **dadurch gekennzeichnet, daß** die Lufteinlaßeinrichtung (7) einen zur Umgebung hin offenen, mit dem Staudruck des mittels der Brennkraftmaschine (1) bewegbaren Fahrzeugs beaufschlagbaren Einlaßstutzen (8) o. dgl. umfaßt.

19. Brennkraftmaschine nach einem der Ansprüche 10 bis 18, **dadurch gekennzeichnet, daß** ein im Abgaskanal (3) angeordneter Drucksensor (12) zum Messen des Drucks des Abgases vorgesehen ist, wobei in Abhängigkeit des Abgasdrucks die Umgebungsluft durch Nutzung des Staudrucks des mittels der Brennkraftmaschine (1) bewegten Fahrzeugs und/oder einer die Luft fördernden Pumpe (9) zuführbar ist.

20. Brennkraftmaschine nach einem der Ansprüche 10 bis 19, **dadurch gekennzeichnet, daß** ein weiterer Katalysator (6) ein Unterbodenkatalysator ist.
